# EUROPÄISCHE PATENTANMELDUNG

(11) **EP 4 286 084 A1**
(43) Veröffentlichungstag der Anmeldung: **06.12.2023**
(21) Anmeldenummer: 23169708.7
(22) Anmeldetag: 25.04.2023
(51) Int. Cl.: B23D 47/04

(54) **SPANNVORRICHTUNG FÜR EINE KREISSÄGE**

(30) Priorität: 10.05.2022 DE 102022111672
(71) Anmelder: Festool GmbH, 73240 Wendlingen am Neckar (DE)
(72) Erfinder: SEIFERT, Luis, 76135 Karlsruhe (DE); KLEINHANS, Lukas, 76131 Karlsruhe (DE); KLEINSCHROT, Miriam, 76149 Neureut (DE); SCHWEIZER, Franz, 76137 Karlsruhe (DE); HÖSCHELE, Nico, 76131 Karlsruhe (DE); SEIZ, Stefan, 76135 Karlsruhe (DE); GWOSCH, Thomas, 76139 Karlsruhe (DE); HELMSTETTER, Sebastian, 76133 Karlsruhe (DE); ZIMPRICH, Sebastian, 76185 Karlsruhe (DE); MATTHIESEN, Sven, 76139 Karlsruhe (DE)
(74) Vertreter: Herrmann, Jochen

(57) **Zusammenfassung**

Die Erfindung betrifft eine Spannvorrichtung (100) für eine Kreissäge, insbesondere eine Kappsäge oder eine Kapp-Zugsäge, mit wenigstens einem Spannabschnitt (300) der zumindest ein Spannelement (301) zur Spannung eines Werkstücks (70) an der Kreissäge aufweist, wobei ein Klemmabschnitt (200) vorgesehen ist, der zur Befestigung der Spannvorrichtung (100) an der Kreissäge ausgebildet ist. Um an einer Kreissäge besonders kleine Werkstücke zuverlässig und sicher spannen zu können, ist es erfindungsgemäß vorgesehen, dass der Klemmabschnitt (200) und/oder der Spannabschnitt (300) einen Aufnahmeabschnitt (310) bilden, der dazu ausgebildet ist ein Sägeblatt (63) an dessen Außenumfang bereichsweise aufzunehmen, und dass der Klemmabschnitt (200) einseitig oder beidseitig des Aufnahmeabschnitts (310) einen oder mehrere Arretierabschnitte (204) aufweist, die dazu ausgebildet und angeordnet sind, die Spannvorrichtung (100) im Bereich eines Begrenzungsrands (24.2) des Sägeschlitzes (24), vorzugsweise an dem Begrenzungsrand (24.2), des Sägeschlitzes (24) der Kreissäge form- und/oder kraftschlüssig festzulegen.

## Beschreibung

Die Erfindung betrifft eine Spannvorrichtung für eine Kreissäge, insbesondere eine Kappsäge oder eine Kapp-Zugsäge, mit wenigstens einem Spannabschnitt der zumindest ein Spannelement zum Spannen eines Werkstücks an der Kreissäge aufweist, wobei ein Klemmabschnitt vorgesehen ist, der zur Befestigung der Spannvorrichtung an der Kreissäge ausgebildet ist.

Die Erfindung betrifft weiterhin eine Kreissäge mit einer Spannvorrichtung zum Spannen eines Werkstücks.

Derartige Kreissägen werden verwendet, um ein Werkstück mit einem Sägeblatt zu schneiden, insbesondere zu zerteilen. Bei dem hier durchgeführten Sägeschnitt wird das Sägeblatt durch den Sägeschlitz der Kreissäge hindurchgeführt. Bei einer Kappsäge wird das Sägeblatt zunächst in den Sägeschlitz eingeschwenkt und dann durch den Sägeschlitz hindurchgeschoben, wobei das auf einer Auflagefläche der Kreissäge aufliegende Werkstück durchtrennt wird.

Unter einem Sägeschlitz soll im Rahmen der vorliegenden Erfindung insbesondere der Bereich einer Kreissäge verstanden werden, in den das Sägeblatt während des Sägevorgangs eintaucht und/oder durch den das Sägeblatt während des Sägevorgangs hindurchgeführt wird.

Zur Fixierung während des Sägevorgangs wird das Werkstück auf eine Auflagefläche der Kreissäge aufgelegt, wobei die Auflagefläche üblicherweise von einem Maschinenbett gebildet wird. Die lagerichtige Ausrichtung des Werkstücks auf dem Maschinenbett erfolgt an einem Anschlag, der üblicherweise Teil der Kreissäge ist. Aus Sicherheitsgründen ist es zusätzlich erforderlich, das Werkstück während des Sägevorgangs mit einer Spannvorrichtung zu fixieren.

Aus dem Stand der Technik sind hierzu unterschiedliche Spannvorrichtungen bekannt. So schlägt die EP 2 363 233 A1 eine Kreissäge in Form einer Kapp-Zugsäge vor, bei der seitlich am Maschinenbett verstellbare Spannböcke angebracht sind. Die Spannböcke sind mit Führungen derart am Maschinenbett gelagert, dass sie quer zum Sägeschlitz verstellt werden können. Jedem Spannbock ist ein Klemmhebel zugeordnet. Mit diesem Klemmhebel kann das Werkstück auf der Auflagefläche des Maschinenbetts fixiert werden.

Derartige Spannvorrichtungen eignen sich zum Spannen langer Werkstücke, die eine ausreichende Längserstreckung quer zur Längsausrichtung des Sägeschlitzes aufweisen. Ein Spannen kurzer Werkstücke ist mit der bekannten Vorrichtung nicht möglich. Der Benutzer ist darauf angewiesen, von Hand das Werkstück während des Sägevorgangs zu halten, was ein erhebliches Sicherheitsrisiko darstellt.

Aus DE 602 10 228 T2 sind Lösungen bekannt, bei denen parallel beabstandet zum Sägeschlitz ein hinterschnittener Spannschlitz vorgesehen ist. An diesem kann ein Werkstück beabstandet zum Sägeschlitz eingespannt werden. Auch hier ist ein Schneiden kurzer Werkstücke nicht möglich.

Es ist Aufgabe der Erfindung, eine Spannvorrichtung der eingangs erwähnten Art bereitzustellen, mit der sich kleine Werkstücke, die eine geringe Ausdehnung quer zur Längserstreckung des Sägeschlitzes aufweisen, sicher und zuverlässig spannen lassen.

Es ist weiterhin Aufgabe der Erfindung, eine Kreissäge mit einer solchen Spannvorrichtung bereitzustellen.

Die Aufgabe der Erfindung wird dadurch gelöst, dass der Befestigungsabschnitt und/oder der Spannabschnitt einen Aufnahmeabschnitt bilden, der dazu ausgebildet ist ein Sägeblatt an dessen Außenumfang bereichsweise aufzunehmen, und dass der Befestigungsabschnitt einseitig oder beidseitig des Aufnahmeabschnitts einen oder mehrere Arretierabschnitte aufweist, die dazu ausgebildet und angeordnet sind, die Spannvorrichtung im Bereich eines Begrenzungsrands vorzugsweise unmittelbar an dem Begrenzungsrand, eines Sägeschlitzes der Kreissäge form- und/oder kraftschlüssig festzulegen.

Erfindungsgemäß kann die Spannvorrichtung mit ihrem Aufnahmebereich unmittelbar im Bereich des Sägeschlitzes angeordnet werden. Die Befestigung der Spannvorrichtung erfolgt an oder im Bereich zumindest einer Auflagefläche eines der Begrenzungsränder des Sägeschlitzes, vorzugsweise an oder im Bereich beider Begrenzungsränder. Für die Befestigung sind hierzu die Arretierabschnitte vorgesehen, die eine form- und/oder kraftschlüssige Festlegung der Spannvorrichtung an der Kreissäge ermöglichen.

Während des Bearbeitungseinsatzes kann das Sägeblatt der Kreissäge mit seinem Außenumfang in den Aufnahmebereich der Spannvorrichtung eintauchen, um die Trennung des Werkstücks mit einem Sägeschnitt zu ermöglichen. Dabei wird das Werkstück in unmittelbarer Nähe zum Sägeschlitz mit den Spannabschnitten der Spannvorrichtung gehalten. Hierdurch ist es insbesondere möglich, auch kleine Werkstücke, die nur eine geringe Ausdehnung quer zur Längserstreckung des Sägeschlitzes aufweisen, sicher und zuverlässig während des Bearbeitungsschritts zu spannen.

Für den Spannvorgang des Werkstücks kann es beispielsweise vorgesehen sein, dass die Spannvorrichtung mit ihrem Aufnahmebereich in den Sägeschlitz eingesetzt wird. Dann kann die Spannvorrichtung längs des Sägeschlitzes mit einer oder mehreren Führungen in Richtung auf das Werkstück verschoben werden, bis es mit den Spannelementen ausreichend sicher gespannt ist. Die Verstellung kann dabei längs der Führung stufenlos oder gestuft vorgenommen werden, wobei bei einer gestuften Ausführung vorzugsweise ein gleichbleibender Stufenabstand gewählt ist. Vorzugsweise kann es dabei so sein, dass die Führung Teil des Arretierabschnitts ist.

Gemäß einer bevorzugten Erfindungsausgestaltung kann es vorgesehen sein, dass mit dem Klemmabschnitt der Spannvorrichtung wenigstens ein Betätigungselement gekoppelt ist, und dass der Arretierabschnitt mittels des Betätigungselements zwischen einer Verriegelungsstellung und einer Entriegelungsstellung verstellbar ist und/oder der Spannabschnitt in eine Spannposition zur Spannung des Werkstücks verstellbar ist. Mit dem Betätigungselement kann der Klemmabschnitt auf einfache Weise zwischen seiner Verriegelungsstellung und der Entriegelungsstellung verstellt werden. In der Entriegelungsstellung lässt sich das Spannelement mit seinem Aufnahmebereich in den Sägeschlitz einsetzen. Wenn das Betätigungselement zusätzlich mit dem Spannabschnitt gekoppelt ist, so lässt sich das Betätigungselement gleichzeitig auch verwenden, um das Werkstück zu spannen. Hierdurch ergibt sich eine komfortable Bedienung, die ein einfaches und schnelles Spannen des Werkstücks ermöglicht. In umgekehrter Richtung kann das Spannelement mit dem Betätigungselement auch wieder einfach aus dem Spannschlitz entfernen, wozu der Klemmabschnitt von seiner Verriegelungsstellung in die Entriegelungsstellung bewegt wird. Vorzugsweise ist das Betätigungselement mit einer Handhabe ausgerüstet, die von einem Benutzer manuell gegriffen werden kann, um die gewünschte Verstellung des Klemmabschnitts bzw. Spannabschnitts zu erreichen.

Eine besonders bevorzugte Erfindungsvariante ist dergestalt, dass der Klemmabschnitt ein Federelement aufweist, mittels dem der oder die Arretierabschnitt/-e von einer Entriegelungsstellung in eine Verriegelungsstellung verstellbar ist/sind. Hierdurch wird die Bedienung der Spannvorrichtung weiter vereinfacht. Sie muss von dem Benutzer lediglich mit ihrem Aufnahmeabschnitt in den Sägeschlitz eingeführt werden. Anschließend verstellt das Federelement den oder die Arretierabschnitte selbsttätig in die Verriegelungsstellung. Wenn dabei zusätzlich vorgesehen ist, dass das Federelement in der Verriegelungsstellung eine Vorspannkraft in Richtung von der Entriegelungsstellung auf die Verriegelungsstellung in den oder die Arretierabschnitte einbringt, dann hält das Federelement den oder die Arretierabschnitte zuverlässig in der Verriegelungsstellung, wodurch beispielsweise eine Klemmung der Spannvorrichtung an der Kreissäge möglich wird. In einer Variante der Erfindung ist dann auch denkbar, dass auf zusätzliche Befestigungsmittel verzichtet werden kann und die Spannvorrichtung mit dem Federelement spielfrei und geklemmt an der Kreissäge gehalten ist.

Für die Spannvorrichtungen ergibt sich ein besonders einfacher Aufbau dann, wenn vorgesehen ist, dass an den beiden Arretierabschnitten jeweils ein Übertragungselement angeschlossen ist, dass die beiden Übertragungselemente den Arretierabschnitten abgewandt mit dem Federelement gekoppelt sind, und dass die Übertragungselemente beidseitig des Aufnahmeabschnitts angeordnet sind.

Gemäß einer Erfindungsvariante kann es auch vorgesehen sein, dass ein Stellelement einen Teil eines Getriebes bildet, mittels dem der zumindest eine Arretierabschnitt und/oder der zumindest eine Spannabschnitt in einem Bewegungsbereich verstellbar ist. Über das Getriebe kann der Arretierabschnitt und/oder der Spannabschnitt kraftuntersetzt verstellt werden. Damit lässt sich die Spannvorrichtung ausreichend sicher an der Kreissäge fixieren. Zum anderen ermöglicht ein Getriebe auch eine stabile Abstützung der Spannvorrichtung an dem Werkstück. Mittels des Getriebes lässt sich beispielsweise eine Kopplung zwischen einem manuell bedienbaren Betätigungselement und dem Arretierabschnitt und/oder dem Spannabschnitt herstellen. Wenn das Getriebe so ausgelegt ist, dass sowohl der Arretierabschnitt als auch der Spannabschnitt von dem Getriebe verstellt werden können, so ist eine besonders komfortable und betriebssichere Bedienung der Spannvorrichtung möglich. Als Getriebe kann beispielsweise ein Hebelgetriebe, ein ebenes Getriebe oder ein Kurvengetriebe zum Einsatz kommen. Andere Getriebeformen sind ebenfalls denkbar.

Erfindungsgemäß kann es auch vorgesehen sein, dass das Getriebe das Betätigungselement und das Stellelement aufweist, wobei das Betätigungselement in Form eines Hebels mittels eines Lagers schwenkbar an dem Klemmabschnitt festgelegt ist, dass das Stellelement einen ersten Exzenter aufweist, mittels dem der Arretierabschnitt zwischen der Verriegelungsstellung und der Entriegelungsstellung verstellbar ist, insbesondere von der Verriegelungsstellung in die Entriegelungsstellung verstellbar ist, und/oder der Spannabschnitt in die Spannposition bewegbar ist.

Zusätzlich oder alternativ kann es auch vorgesehen sein dass das Stellelement ein Stellglied aufweist, mittels dem der Arretierabschnitt von der Entriegelungsstellung in die Verriegelungsstellung verstellbar ist, um ein einfaches und sicheres Lösen der Spannvorrichtungen zu ermöglichen.

Wenn vorgesehen ist, dass der Arretierabschnitt mittels eines zweiten Exzenters in der Verriegelungsstellung blockiert, insbesondere formschlüssig festgelegt ist, dann kann die Montagestellung der Spannvorrichtungen betriebssicher fixiert werden.

Eine erfindungsgemäße Spannvorrichtung kann auch derart gestaltet sein, dass der oder die Arretierabschnitte einen Stützabschnitt und beabstandet zu diesem Stützabschnitt ein Klemmstück aufweist, und dass der Stützabschnitt und das Klemmstück auf der dem Aufnahmeabschnitt abgewandten Bereich außenseitig angeordnet sind. Bei dieser Variante der Erfindung liegt der Stützabschnitt dann im Montagezustand an der Oberseite des Begrenzungsrands an und/oder das Klemmstück an der Unterseite, um eine Fixierung der Spannvorrichtungen zu ermöglichen. Das Klemmstück bzw. der Stützabschnitt blockieren dann die Spannvorrichtungen quer zur Längserstreckung des Sägeschlitzes an der Kreissäge.

Weiterhin kann es insbesondere auch so sein, dass der Stützabschnitt und/oder der Klemmabschnitt ein Flächenelement bildet, das sich in Längsrichtung des Sägeschlitzes erstreckt. Dieses Flächenelement kann sich auf einer, an den Begrenzungsrand anschließenden Oberseite bzw. Unterseite flächig abstützen. Zwischen der Oberseite/Unterseite und dem Flächenelement bildet sich dann beispielsweise eine Reibschlussverbindung, die im Montagezustand eine Verschiebung der Spannvorrichtung längs des Sägeschlitzes blockiert oder verhindert. Ist die Spannvorrichtung in einen Entriegelungszustand gebracht, so kann die Spannvorrichtung mit dem Flächenelement an der Oberseite/Unterseite, längs des Sägeschlitzes in die Bestimmungsposition verschoben werden.

Wie dies vorstehend erwähnt wurde, ist es denkbar, dass das Klemmstück ein Flächenelement aufweist, das sich unterseitig an einer Gegenfläche, welche an den Begrenzungsrand anschließt, anliegt. Dabei muss das Flächenelement des Gegenstücks nicht zwangsläufig eben ausgebildet sein, sondern es kann auch vorgesehen sein, dass das Flächenelement beispielsweise eine Zahnung bildet, die mit einer Gegenzahnung an der Unterseite des Begrenzungsrands zusammenarbeitet, um eine formschlüssige Blockade der Spannvorrichtung längs des Sägeschlitzes im Montagezustand zu ermöglichen. Wenn die Zahnung an der Unterseite vorgesehen ist, behindert sie die oberseitige Auflagefläche für das Werkstück nicht.

Selbstverständlich kann es auch vorgesehen sein, dass die dem Sägeschlitz zugewandte Begrenzungskante des Begrenzungsrands ausgebildet ist, um eine Reibschlussverbindung und/oder eine Formschlussverbindung zu bilden. Beispielsweise kann die Begrenzungskante mit einer Zahnung ausgebildet sein, die mit einer Gegenzahnung der Spannvorrichtung zusammenarbeitet.

Eine besonders bevorzugte Erfindungsvariante ist dergestalt, dass der Spannabschnitt in und/oder entgegengesetzt zu einer Werkzeugspannrichtung verstellbar gegenüber dem Klemmabschnitt angekoppelt ist. Mittels dieser Kopplung werden die Klemmfunktion und die Spannfunktion voneinander getrennt. Dies ermöglicht auf einfachste Weise eine zuverlässige Spannung des Werkstücks

Besonders bevorzugt kann es dabei vorgesehen sein, dass der Spannabschnitt mittels eines Federabschnitts an den Klemmabschnitt angekoppelt ist. Dementsprechend kann die Spannvorrichtung zunächst gegen das Werkstück gespannt und dann die Klemmverbindung hergestellt werden. Über den Federabschnitt wird ein sicherer Halt des Werkstücks gewährleistet.

Zusätzlich oder alternativ kann es auch vorgesehen sein, dass der Spannabschnitt mittels einer Schiebeführung an den Klemmabschnitt angekoppelt ist. Hierbei ist es dann beispielsweise möglich, dass die Spannvorrichtung zunächst an ihrem Klemmabschnitt an der Kreissäge gesichert und anschließend der Spannabschnitt gegen das Werkstück verspannt wird.

Wenn vorgesehen ist, dass der Klemmabschnitt einen Stützabschnitt aufweist, an dem der Spannabschnitt in einer Werkzeugspannposition mit einem Anschlag, vorzugsweise mit einem sich quer zur Werkstückspannrichtung erstreckenden Flächenabschnitt, anliegt, dann können die während des Bearbeitungseinsatzes in das Werkstück eingebrachten Schnittkräfte von dem Spannabschnitt in den Klemmabschnitt abgeleitet werden, wobei das Werkstück sicher in seiner Betriebsposition gehalten bleibt.

Eine erfindungsgemäße Spannvorrichtung kann dergestalt sein, dass der Spannabschnitt zwei zueinander beabstandete Ansätze aufweist, die beidseitig des Aufnahmeabschnitts angeordnet sind und die vorzugsweise mittels eines Verbindungselements am unteren Endbereich des Aufnahmeabschnitts miteinander verbunden sind, sodass sich eine besonders kompakt bauende Anordnung ergibt.

Vorzugsweise kann es vorgesehen sein, dass der Spannabschnitt ein oder mehrere Spannelemente aufweist, die einseitig oder beidseitig des Aufnahmeabschnitts angeordnet sind und der/die dem Klemmabschnitt abgewandt jeweils eine vordere Werkstückspannfläche aufinieist/-en.

Eine besonders sichere Spannung des Werkstücks ergibt sich dann, wenn vorgesehen ist, dass die eine oder mehrere Werkstückspannfläche/-n in Richtung der WerkstückspannRichtung (W) geneigt verlaufen. Die geneigt verlaufende Werkstückspannfläche kann dann beispielsweise so gestaltet werden, dass sie mit einem Teil ihrer Spannfläche das Werkstück auf seiner dem Sägeschlitz gegenüberliegenden Seite übergreift. Damit kann ein Abheben des Werkstücks während des Bearbeitungsvorgangs verhindert werden. Weiterhin kann die Zuordnung zu dem Werkstück dann so getroffen werden, dass sich über die geneigt verlaufende Werkstückspannfläche eine vertikale Spannkraftkomponente ergibt. Diese verläuft in Richtung parallel zur Sägeblattebene. Somit wird die Klemmwirkung verstärkt.

Wenn vorgesehen ist, dass an dem oder den Spannelement/-en des Spannabschnitts zumindest eine auswechselbare Spannbacke angeordnet ist, wobei die Spannbacke die Werkstückspannfläche bildet, dann lässt sich die Spannvorrichtung auf einfache Weise individuell an unterschiedliche Werkstückgeometrien und Werkstückausrichtungen anpassen.

Denkbar ist es auch, dass an gegenüberliegenden Seiten des Klemmabschnitts jeweils ein Spannabschnitt vorgesehen ist. Der Anwender kann dann wählen, welchen der beiden Spannabschnitte er verwendet, um das Werkstück zu spannen. Dabei können die Spannabschnitte insbesondere unterschiedlich gestaltet und auf unterschiedliche Werkstückgeometrien oder Werkstückausrichtungen angepasst sein.

Wie dies oben bereits angedeutet wurde, kann es vorteilhaft sein, wenn der Klemmabschnitt der Spannvorrichtung in der Montageposition in Längsrichtung des Sägeschlitzes formschlüssig arretiert wird. Hierzu kann es insbesondere vorgesehen sein, dass an dem Klemmabschnitt zumindest ein Formschlusselement vorgesehen ist, welches angeordnet und ausgebildet ist, um mit einem Gegen-Formschlusselement der Kreissäge zusammenzuarbeiten, um eine Verstellung des Klemmabschnitts gegenüber der Kreissäge in der Verriegelungsstellung des Klemmabschnitts entgegengesetzt zur WerkzeugSpannrichtung zu verhindern, wobei vorzugsweise vorgesehen ist, dass eine Vielzahl von Formschlusselementen und/oder Gegen-Formschlusselementen eine Zahnreihe bilden.

Die Aufgabe der Erfindung wird auch gelöst mit einer Kreissäge, insbesondere einer Kappsäge oder einer Kapp-Zugsäge, mit einem Maschinenbett, das eine Auflage mit einer Auflagefläche zur Abstützung eines zu sägenden Werkstücks aufweist, wobei die Auflage einen Sägeschlitz aufweist, wobei im Bereich des Sägeschlitzes eine Spannvorrichtung nach einem der Ansprüche 1 bis 15 angeordnet ist, wobei die Spannvorrichtung mit ihrem Befestigungsabschnitt im Bereich des Begrenzungsrands des Sägeschlitzes form- und/oder kraftschlüssig festgelegt ist, und wobei der Aufnahmeabschnitt im Bereich des Sägeschlitzes angeordnet ist.

Die Erfindung wird im Folgenden anhand von in den Zeichnungen dargestellten Ausführungsbeispielen näher beschrieben. Es zeigen:
Figur 1 in perspektivischer Darstellung eine Kreissäge,
Figur 2 in perspektivischer Ansicht von vorne eine Spannvorrichtung,
Figur 3 die Spannvorrichtung gemäß Figur 2 in perspektivischer Ansicht von hinten,
Figur 4 die Spannvorrichtung gemäß den Figuren 2 und 3 in Seitenansicht,
Figur 5 verschiedene Ausführungsformen eines Sägeschlitzes einer Kreissäge im Querschnitt,
Figur 6 die Spannvorrichtung gemäß den Figuren 2 bis 4 in verschiedenen Montagepositionen in Ansicht von vorne,
Figur 7 die Darstellung gemäß Figur 6, wobei sich die Spannvorrichtung in einer Anbauposition an der Kreissäge befindet,
Figur 8 eine weitere Ausgestaltungsvariante einer Spannvorrichtung in Ansicht von vorne, wobei sich die Spannvorrichtung in einer Anbaupositionen an der Kreissäge befindet,
Figuren 9 und 10 die Spannvorrichtung gemäß Figur 8 in Schnittansicht und verschiedenen Betriebsstellungen längs des in Figur 8 mit IX-IX gekennzeichneten Schnittverlaufs,
Figur 11 bis 14 die Spannvorrichtung gemäß den Figuren 8 bis 10 in verschiedenen Ansichten und Betriebsstellungen,
Figur 15 A eine Variante der Spannvorrichtung gemäß den Figuren 2 bis 4,
Figuren 15 B bis 15 E verschiedene Ausführungsformen von Spannabschnitten für die Spannvorrichtung gemäß Figur 15 A in Seitenansicht,
Figur 16 eine weitere Ausgestaltungsvariante einer Spannvorrichtung mit schräg zum Aufnahmeabschnitt angeordnetem Spannabschnitt und
Figur 17 eine weitere Ausgestaltungsvariante einer Spannvorrichtung mit beidseitig des Aufnahmeabschnitts angeordneten Spannabschnitten.

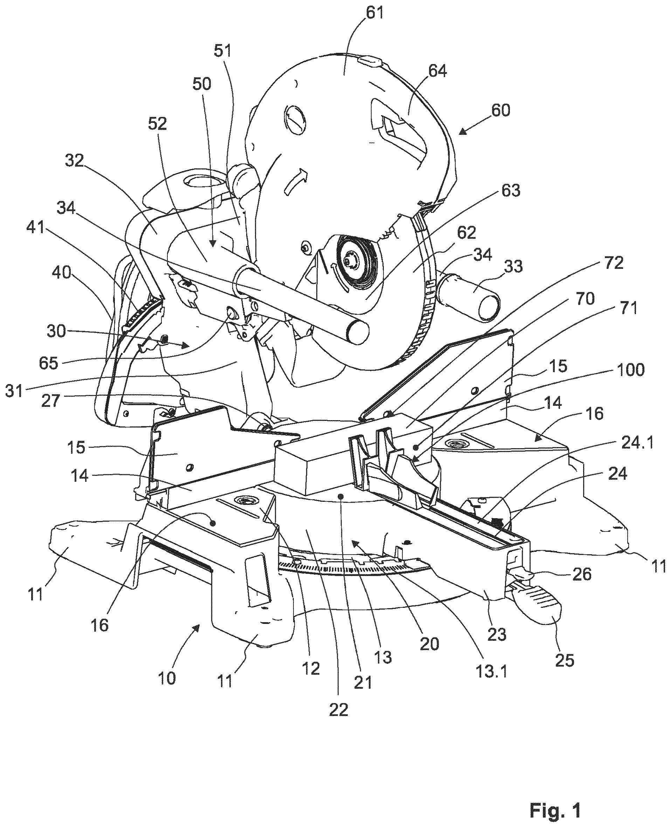

Figur 1 zeigt eine Kreissäge, nämlich eine Kapp-Zugsäge. Diese Kreissäge weist ein Maschinenbett 10 auf, welches über Füße 11 auf einer Arbeitsfläche abgestellt werden kann. Das Maschinenbett 10 besitzt ein Lagerteil 12, welches einen Stützabschnitt 13 für eine Schwenkvorrichtung 20 aufweist. Die Schwenkvorrichtung 20 kann in dem Lagerteil 12 um eine vertikale Schwenkachse verschwenkt werden, sodass Gehrungsschnitte mit der Kreissäge möglich sind. Im Bereich des Stützabschnitts 13 ist auch eine Skala 13.1 vorgesehen, die eine Winkelteilung aufweist, um die gewünschte Schwenkstellung der Schwenkvorrichtung 20 einstellen zu können.

Das Maschinenbett 10 und die Schwenkvorrichtung 20 bilden Auflageflächen 16 und 21, die miteinander fluchtend auf einer Ebene angeordnet sind. Auf dem Maschinenbett 10 sind zwei seitliche Anschläge 14 montiert, die mittels Anschlagplatten 15 in Vertikalrichtung verlängerbar sind.

Die Anschläge 14 dienen zur Anlage eines zu bearbeitenden Werkstücks 70, wobei das Werkstück 70 mit seiner Rückseite 72 gegen die Anschläge 14 bzw. die Anschlagplatten 15 zur Anlage gebracht werden kann. Gegenüberliegend der Rückseite 72 weist das Werkstück 70 eine Vorderseite 71 auf, auf die eine Spannvorrichtung 100 einwirkt, wie dies später noch näher beschrieben wird.

Wie Figur 1 weiter veranschaulicht, besitzt die Schwenkvorrichtung 20 außenseitig eine Begrenzungsfläche 22, die einer Gegenfläche des Maschinenbetts 10 im Bereich des Lagerteils 12 gegenübersteht. Die Schwenkvorrichtung 20 kann mittels einer Lagerung mit vertikaler Schwenkachse gegenüber dem Maschinenbett 10 verschwenkt werden.

Vorderseitig ist an der Schwenkvorrichtung 20 ein Ausleger 23 vorhanden, der an seinem längsseitigen Ende ein Klemm-Betätigungselement 25 und ein Rast-Betätigungselement 26 trägt. Die Schwenkvorrichtung 20 kann um ihre vertikale Schwenkachse zwischen festen Rastpositionen verschwenkt werden. Um die Rastverbindung in einer Rastposition aufzuheben, muss die Schwenkvorrichtung 20 mittels des Rast-Betätigungselements 26 entriegelt werden. Zwischen den Rastpositionen kann die Schwenkvorrichtung 20 stufenlos verschwenkt werden. Die Fixierung der Schwenkvorrichtung 20 in einer Zwischenposition erfolgt mit einer Klemmverbindung. Diese Klemmverbindung kann mit dem Klemm-Betätigungselement 25 gelöst werden.

Die Kreissäge weist einen Sägeschlitz 24 auf, der sich wie im vorliegenden Ausführungsbeispiel im Bereich der Schwenkvorrichtung 20 erstrecken kann und hier beispielsweise bis in den Bereich des Auslegers 23 geführt ist.

Der Sägeschlitz 24 wird beidseitig von Begrenzungsrändern 24.2 begrenzt. Zu beiden Seiten des Sägeschlitzes 24 erstrecken sich jeweils Auflageflächen 24.1 der Begrenzungsränder 24.2.

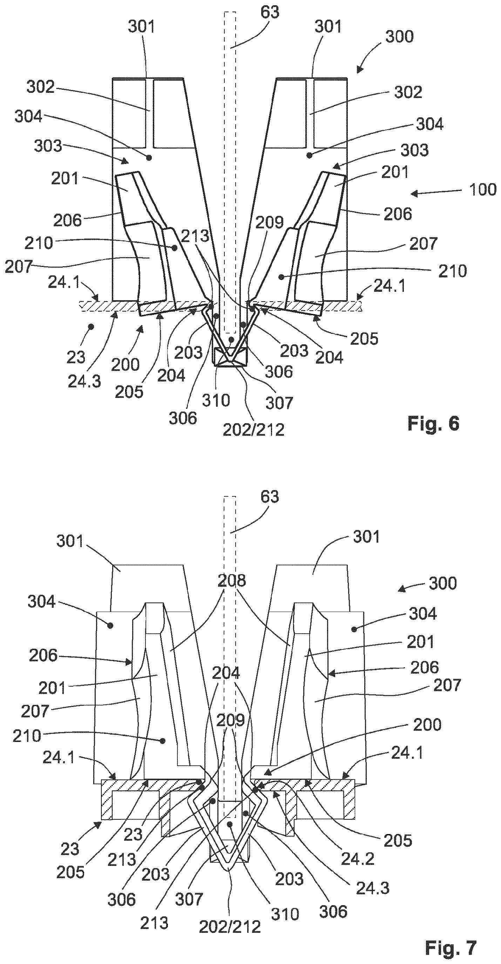

Wie die Figuren 6 und 7 zeigen, kann es vorgesehen sein, dass die Begrenzungsränder 24.2 an der der Auflagefläche 24.1 abgewandten Seite eine Unterseite 24.3 bilden, die insbesondere parallel zu der Auflagefläche 24.1 ausgerichtet sein kann. Zum Sägeschlitz 24 hin wird der Begrenzungsrand 24.2 von einer Begrenzungskante abgeschlossen. Die Begrenzungskante kann sich dabei vertikal zur Auflagefläche 24.1 erstrecken. Denkbar ist es jedoch auch, dass, wie Figur 7 zeigt, die Begrenzungskante abgerundet ist und oder mit einer zur Auflagefläche 24.1 geneigt verlaufenden Kontur ausgestaltet ist.

Figur 1 zeigt weiter, dass die Kreissäge einen Träger 30 aufweist, der mit einer Basis 31 über ein Schwenklager 27 mit horizontaler Schwenkachse an das Maschinenbett 10 angekoppelt ist. Der Träger 30 besitzt einen Kopf 32, der über eine Schwenkführung an einem Lagergehäuse 40 des Maschinenbetts 10 abgestützt ist. Im Bereich dieser Abstützung kann die Schwenkbewegung des Trägers 30 geführt gegenüber dem Lagergehäuse 40 verstellt und fixiert werden. Am Lagergehäuse 40 ist eine Skala 41 vorgesehen, an der die Schwenkstellung abgelesen werden kann. Die Einstellung der Schwenkstellungen des Trägers 30 gegenüber dem Lagergehäuse 40 kann beispielsweise mit einer Kopplung, insbesondere einem Getriebe erfolgen, wobei die Schwenkstellung mittels einer Einstelleinrichtung 33 bedienerseitig vorgenommen werden kann.

Figur 1 zeigt weiter, dass der Träger 30 Linearführungs-Elemente 34 aufweist, die sich in Richtung des Sägeschlitzes 24 erstrecken und die einen Sägeschlitten 50 in diese Richtung linear führen. Der Sägeschlitten 50 weist hierzu einen Grundkörper 51 auf, an dem Linearlager-Elemente 52 angeordnet sind, welche mit den Linearführungs-Elementen 34 des Trägers 30 zur Bildung der Linearführung zusammenarbeiten. Am Ende eines der Linear-Führungselemente 34 ist die Einstelleinrichtung 33 in Form einer drehbaren Handhabe angeordnet.

An dem Träger 30 ist über ein Kapp-Schwenklager 65 mit horizontaler Schwenkachse eine Sägeeinrichtung 60 angebracht. Die Sägeeinrichtung 60 weist ein Gehäuse 61 mit einer Schutzabdeckung 62 auf. Innerhalb des Gehäuses 61 ist ein Sägeblatt 63 angeordnet. In der in Figur 1 dargestellten ausgeschwenkten Betriebsstellung ist das Sägeblatt 63 der Kreissäge an seiner Unterseite zusätzlich mit einer Schutzabdeckung 62 des Gehäuses 61 überdeckt. Das Gehäuse 61 besitzt einen Griff 64 mit einem Schalter. Mit dem Schalter kann die Kreissäge aktiviert werden. An dem Griff 64 kann die Sägeeinrichtung 60 gegenüber dem Träger 30 um die horizontale Schwenkachse des Kapp-Schwenklagers 65 verschwenkt werden, sodass das Sägeblatt 63 in den Sägeschlitz 24 eintauchen kann, wobei die Schutzabdeckung 62 sich öffnet, um das Sägeblatt 63 freizugeben. Zusätzlich kann das Sägeblatt 63 in der eingeschwenkten Betriebsstellung entlang des Sägeschlitzes 24 verstellt werden. Hierzu wird die Sägeeinrichtung 60 längs der Linearführung-Elemente 34 des Trägers 30 verschoben. Dabei kann ein Trennschnitt in dem Werkstück 70 vorgenommen werden.

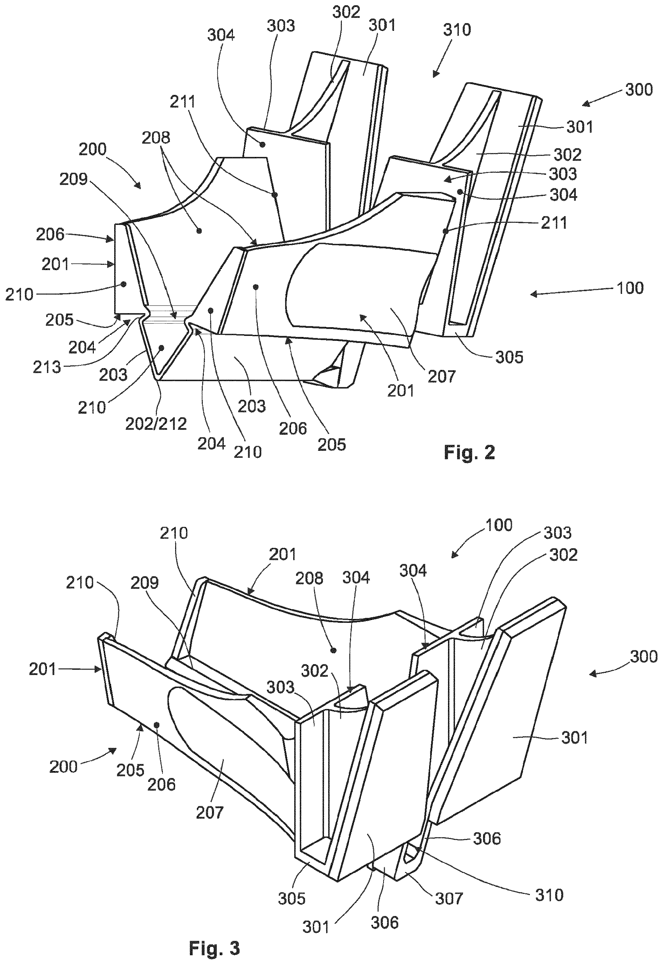

Um das Werkstück 70 während dieses Bearbeitungsvorganges sicher zu spannen, ist die erfindungsgemäße Spannvorrichtung 100 verwendet. Diese Spannvorrichtung 100 wird nachstehend unter Bezugnahme auf die Figuren 2 und 3 näher erläutert.

Wie diese Darstellungen zeigen, besitzt die Spannvorrichtung 100 einen Klemmabschnitt 200 und einen Spannabschnitt 300.

Der Klemmabschnitt 200 besitzt an gegenüberliegenden Seiten Arretierabschnitte 204. Diese Arretierabschnitte 204 können jeweils einen Stützabschnitt 205 aufweisen, welcher als Flächenelement ausgebildet ist. Weiterhin besitzen die Arretierabschnitte 204 Klemmstücke 213, die ebenfalls als Flächenelemente ausgebildet sein können.

Der Stützabschnitt 205 und/oder das Klemmstück 213 erstrecken sich in Längsrichtung des Sägeschlitzes 24. Vorzugsweise ist es so, dass die Erstreckung des Stützabschnittes 205 und/oder des Klemmstücks 213 zumindest das 2-fache der Längserstreckung der Breite des Sägeschlitzes 24 beträgt, um eine geeignete Stützlänge zur Verfügung zu stellen.

Wie die Zeichnungen zeigen, kann der Arretierabschnitt 204 mit dem Stützabschnitt 205 und dem Klemmstück 213 eine nutförmige Aufnahme bilden. Dabei ist die nutförmige Aufnahme auf die Dimensionierung des Begrenzungsrands 24.2 des Sägeschlitzes 24 angepasst ausgebildet derart, dass der Stützabschnitt 205 auf der Auflagefläche 21 der Schwenkvorrichtung 20 oberseitig aufliegt. Das Klemmstück 213 kann dann an der Unterseite 24.3 und/oder an der Begrenzungskante des Begrenzungsrands 24.2 anliegen.

Die beiden Arretierabschnitte 204 können mit einem Stellelement 202 miteinander verbunden sein. Dabei kann das Stellelement 202 insbesondere als Federelement 212 ausgebildet sein.

Im vorliegenden Ausführungsbeispiel sind die Arretierabschnitte 204 an Übertragungselemente 203 angekoppelt, wobei die Übertragungselemente 203 im Bereich des Stellelements 202 miteinander gekoppelt sind. Vorzugsweise verlaufen die beiden Übertragungselemente 203 zueinander im Winkel kleiner 90°, wobei sich dieser Winkel von dem Stellelement 202 in Richtung auf die Arretierabschnitte 204 hin öffnet.

Es kann auch vorgesehen sein, dass einer oder beide Arretierabschnitte 204 jeweils an ein Betätigungselement 201 angekoppelt ist/sind, welches mit einem Betätigungselement, insbesondere in Form eines Griffstücks 207 ausgestattet ist. Das Griffstück 207 kann in Form einer Griffmulde in eine Außenwand 206 des Betätigungselements 201 eingetieft sein.

Wie Figur 2 zeigt, können die Betätigungselemente 201 gegenüberliegend den Übertragungselementen 203 an die Arretierabschnitte 204, insbesondere an den Stützabschnitt 205 angekoppelt sein. Die Betätigungselemente 201 können zueinander V-förmig angestellt sein.

Im Bereich der Vorderseite schließen die Betätigungselemente 201 mit jeweils einem Wandstück 210 ab, welches insbesondere auch einteilig mit dem zugeordneten freien Ende des Stützabschnitts 205 verbunden sein kann, wie dies Figur 2 deutlich zeigt. Mittels des Wandstücks 210 ist das Betätigungselement 201 gegenüber dem Arretierabschnitt 204 ausgesteift.

Die Spannvorrichtung 100 weist im Bereich ihres Klemmabschnitts 200 einen Aufnahmeabschnitt 310 auf, der dazu ausgebildet ist das Sägeblatt 63 an dessen Außenumfang bereichsweise aufzunehmen, wenn das Sägeblatt 63 in den Bereich des Sägeschlitzes 24 eingeschwenkt ist. Wie die Zeichnung erkennen lässt, sind die Arretierabschnitte 204 beidseitig des Aufnahmeabschnitts 310 außenseitig an der Spannvorrichtung angeordnet. Mit anderen Worten kann es so sein, dass der Aufnahmeabschnitt 310 zumindest bereichsweise von den Wandstücken 210 und dem Stellelement 202 begrenzt ist. Weiterhin kann es auch so sein, dass die Innenseiten 208 der Betätigungselemente 201 eine Begrenzung des Aufnahmeabschnitts 310 bilden.

Dem Aufnahmeabschnitt 310 zugewandt sind im Bereich der Arretierabschnitte 204 Rippen 209 an gegenüberliegenden Seiten angeformt, wobei die Rippen 209 in Längsrichtung der Spannvorrichtung 100 verlaufen. Die Rippen 209 steifen den Bereich der Arretierabschnitte 204 aus.

Wie dies vorstehend erwähnt wurde, besitzt die Spannvorrichtung 100 auch einen Spannabschnitt 300. Dieser Spannabschnitt ist funktional dazu ausgebildet das Werkstück 70 an der Kreissäge zu spannen.

Der Spannabschnitt 300 besitzt beidseitig des Aufnahmeabschnitts 310 Spannelemente 301. Die Spannelemente 301 können so gestaltet sein, dass sie über ein Verbindungselement 302 einteilig an ein Anlagestück 303 angeschlossen sind. Das Anlagestück 303 kann einen Flächenabschnitt 304 bilden, der einem Stützabschnitt 211 des Klemmabschnitts 200 gegenübersteht. Dabei kann es so sein, dass in der nicht an der Kreissäge montierten Position der Spannvorrichtung 100 der Flächenabschnitt 304 beabstandet zu dem Stützabschnitt 211 angeordnet ist. Weiterhin kann es aus Steifigkeitsgründen vorgesehen sein, dass das Anlagestück 303 über einen Steg 305 mit dem Spannelement 301 verbunden ist.

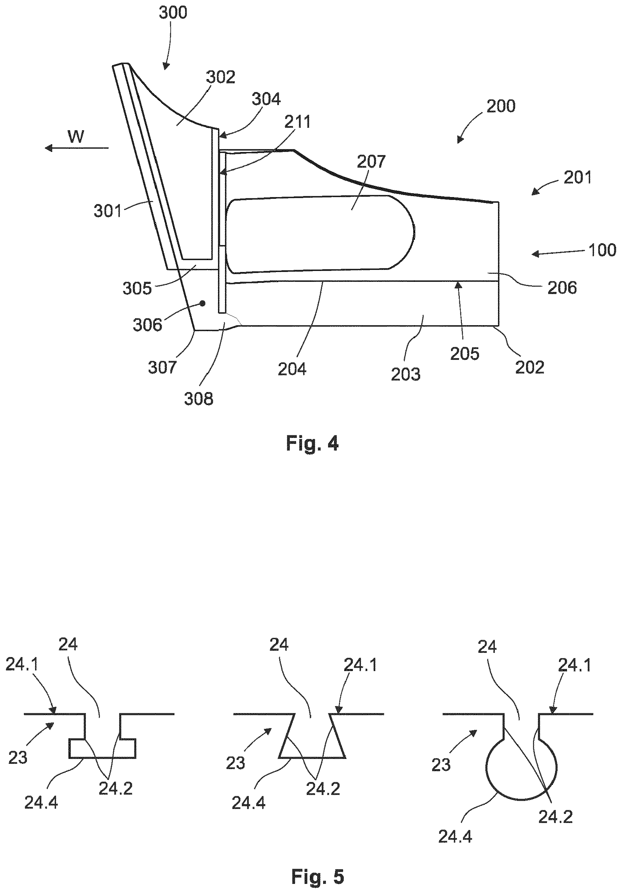

Der Spannabschnitt 300 kann über einen Federabschnitt 308, der in Figur 4 erkennbar ist, an den Klemmabschnitt 200 angekoppelt sein. Die Federwirkung des Federabschnitts 308 ist dabei so, dass die Spannelemente 301 in Richtung auf die Stützabschnitte 211 ausgelenkt werden können, wobei sich dabei eine Federvorspannung im Federabschnitt 308 aufbaut. Vorzugsweise wird der Spannabschnitt 300 über den Federabschnitt 308 einteilig mit dem Klemmabschnitt 200 verbunden.

Die beiden Spannelemente 301 sind über ein Verbindungselement 307 einteilig miteinander verbunden. Dabei kann es so sein, dass an den Spannelementen 301 Ansätze 306 vorgesehen sind, die über das Verbindungselement 307 miteinander verbunden sind.

Der Aufnahmeabschnitt 310 erstreckt sich, wie Figur 3 erkennen lässt, sowohl über den Bereich des Klemmabschnitts 200 als auch über den Bereich des Spannabschnitts 300. Vorzugsweise kann es so sein, dass der Aufnahmeabschnitt 310 im Bereich des Spannabschnitts 300 von den Ansätzen 306 und dem Verbindungselement 307 begrenzt ist.

Anhand der Figuren 6 und 7 wird nachfolgend die Vorgehensweise zur Befestigung der in den Figuren 2 bis 4 gezeigten Spannvorrichtung 100 an der Kreissäge gemäß Figur 1 beschrieben.

In Figur 6 ist in gestrichelter Darstellung ein Teil der Schwenkvorrichtung 20 mit ihrer Auflagefläche 24.1 gezeigt. Weiterhin ist in dieser Darstellung die Spannvorrichtung 100 in Frontansicht gezeigt, wobei sich die Spannvorrichtung 100 in ihrer nicht montierten Ausgangsposition befindet. Ausgehend von dieser Position können die Betätigungselemente 201 an den Griffstücken 207 gegeneinander geschwenkt werden. Die Schwenkachse verläuft dabei im Bereich des Stellelements 202. Bei dieser Bewegung werden die Arretierabschnitte 204 aufeinander zu bewegt. Insbesondere kann es dabei so sein, dass die Arretierabschnitte 204 soweit aufeinander zu bewegt werden, dass der maximale Abstand der Klemmstück 213 zueinander kleiner ist als die Breite des Sägeschlitzes 24. Dann kann die Spannvorrichtung 100 mit dem Stellelement 202 voraus in den Sägeschlitz 24 eingesteckt werden. Diese Einsteckbewegung wird mit den Stützabschnitten 205 begrenzt, die auf der Auflagefläche 24.1 zum Liegen kommen. Anschließend können die Betätigungselement 201 entlastet werden, wobei dann das Stellelement 202, wenn es als Federelement 212 ausgebildet ist, die Betätigungselemente 201 selbsttätig in die in Figur 7 gezeigte Stellung bewegt. In dieser Stellung liegen die Stützabschnitte 205 beidseitig des Sägeschlitzes 24 auf den Auflageflächen 24.1 der Begrenzungsränder 24.2 auf.

Je nach Ausbildung der Klemmstücke 213 liegen diese entweder an der Unterseite 24.3 der Begrenzungsränder 24.2 oder, wie dies Figur 7 zeigt, an der dem Sägeschlitz 24 zugewandten Begrenzungskante des Begrenzungsrands 24.2 an, vorzugsweise derart, dass sich eine hinterschnittene Anlage ergibt, wie Figur 7 veranschaulicht.

Die Stützabschnitte 205 und die Klemmstück 213 blockieren in der in Figur 7 gezeigten Montageposition formschlüssig den Versatz der Spannvorrichtung 100 quer zur Längserstreckung des Sägeschlitzes 24, wie dies aus Figur 7 hervorgeht. In Richtung der Längserstreckung des Sägeschlitzes 24 ist der Klemmabschnitt 200 durch Anlage des Stützabschnitts 205 auf der Auflagefläche 24.1 und durch Auflage des Klemmstücks 213 an dem Begrenzungsrand 24.2 kraftschlüssig festgelegt.

Die Spannung des Werkstücks 70 ist nun einfach möglich. Hierzu müssen lediglich die Betätigungselemente 201 der in den Sägeschlitz 24 eingesetzten Spannvorrichtung 100 aufeinander zubewegt werden. Dann kann die gesamte Spannvorrichtung 100 gegen das Werkstück 70 geschoben werden, bis die Spannelemente 301 sich an die Vorderseite 71 des Werkstücks 70 anlegen.

Wie dies vorstehend beschrieben wurde, kann es so sein, dass der Flächenabschnitt 304 des Spannelements 301 im Abstand zu dem Stützabschnitt 211 steht. Wenn nun die Spannelemente 301 gegen das Werkstück 70 geschoben werden, so wird unter Aufbau einer Federvorspannung der Federabschnitt 308 ausgelenkt. Dadurch wird zusätzlich eine Federkraft für eine verbesserte Spannung der Spannelemente 301 gegen das Werkstück 70 mit dieser optionalen Variante erreicht.

Um eine solche Federvorspannung zu erreichen, können auch an beliebiger anderer Stelle im Spannabschnitt 300 Federelemente verwendet sein. Beispielsweise ist es möglich, dass Spannelement 301 aus einem federelastisch komprimierbaren Material zu bilden oder es an seiner Spannfläche mit einer federelastischen Schicht zu versehen.

Wie Figur 1 zeigt, kann mit der Spannvorrichtung 100 das Werkstück 70 fest gegen die Anschläge 14 gedrückt werden. Dadurch dass die Spannelemente 301 so ausgebildet sind, dass sie in Werkstück-Spannrichtung W geneigt verlaufen, übergreifen sie bereichsweise die Oberseite des Werkstücks 70 und es wird dabei eine Spannkraft nicht nur gegen die Anschläge 14 sondern auch vertikal in Richtung auf die Auflagefläche 21 bewirkt.

Wenn das Werkstück 70 eingespannt ist, kann die Kreissäge bedient werden. Dabei wird das Sägeblatt 63 in den Sägeschlitz 24 eingeschwenkt und durch diesen hindurch gefahren. Dabei gelangt das Sägeblatt 63 in den Bereich des Aufnahmeabschnitts 310 der Spannvorrichtung 100, wie dies Figur 7 zeigt. Dort ist das Sägeblatt 63 in gestrichelter Darstellung gezeigt. Wie diese Darstellung veranschaulicht, kann das Sägeblatt 63 problemlos durch den Aufnahmeabschnitt 310 hindurch fahren.

Figur 5 zeigt, dass es mit der Erfindung möglich wird auch den Sägeschlitz 24 funktional angepasst auszugestalten, um die Spannvorrichtung 100 geeignet festzulegen. An dieser Stelle soll erwähnt werden, dass die erfindungsgemäße Spannvorrichtung 100 insbesondere dazu geeignet ist, bei vorhandenen und bekannten Kreissägen an deren Sägeschlitz 24 nachgerüstet zu werden. Dies stellt einen Vorteil der Erfindung dar.

Figur 5 zeigt, dass der Sägeschlitz 24 gegenüber konventionellen Lösungen auch in Form eines hinterschnittenen Sägeschlitzes 24 ausgebildet sein kann. Hierzu kann der Sägeschlitz 24 im Querschnitt eine T-Form oder eine Schwalbenschwanzform aufweisen, wie dies Figur 5 zeigt. Weiterhin ist es denkbar, dass sich an die Begrenzungsränder 24.2 anschließend eine beliebig erweiternde Geometrie der Auflagefläche 24.1 abgewandt anschließen kann, wie dies in Figur 5 angedeutet ist.

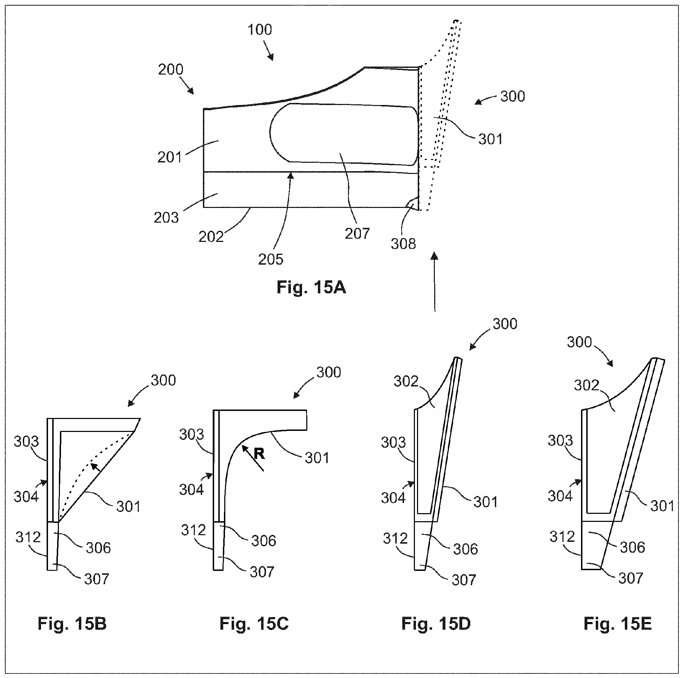

In Figur 15 A ist eine weitere Ausgestaltungsvariante der Erfindung gezeigt, wobei diese im Wesentlichen der Ausgestaltungsvariante gemäß den Figuren 1 bis 7 entspricht, sodass nachfolgend zur Vermeidung von Wiederholungen nur auf die Unterschiede eingegangen werden muss.

Wie diese Darstellung zeigt, ist die Spannvorrichtung 100 so ausgebildet, dass der Spannabschnitt 300 und/oder die einzelnen Spannelemente 301 auswechselbar mit dem Klemmabschnitt 200 verbunden sind. Dies hat den Vorteil, dass unterschiedliche Spannelemente 301 zum Einsatz kommen können, um unterschiedlich geformte Werkstücke 70 geeignet zu spannen. Denkbar ist es, dass zur auswechselbaren Ankopplung des Spannabschnitts 300 bzw. der Spannelemente 301 eine geeignete Steckverbindung vorgesehen ist.

Figur 15 A zeigt die Ausgestaltung eines Spannabschnitts 300, der im Wesentlichen der Ausgestaltung des Spannabschnitts 300 gemäß den Figuren 1 bis 7 entspricht. Dieser Spannabschnitt 300 ist in Figur 15 D in Einzeldarstellung symbolisch veranschaulicht. Der Spannabschnitt kann ausgetauscht werden gegen einen Spannabschnitt 300 gemäß den Figuren 15 B, C oder E.

Der Spannabschnitt 300 gemäß Figur 15 B weist ein Spannelement 301 auf, welches an seiner Werkstück-Spannfläche ein elastisches Element aufweist, welches ausgebildet ist sich an die Kontur eines unregelmäßig geformten Werkstücks anzuformen. Bei dem Spannelement 301 gemäß Figur 15 C ist eine konkave Werkstück-Spannfläche verwirklicht. Der Spannabschnitt 300 gemäß Figur 15 E unterscheidet sich von dem gemäß Figur 15 D dadurch, dass das Spannelement 301 stärker in Werkstück-Spannrichtung W angestellt ist als das Spannelement 301 gemäß Figur 15 D.

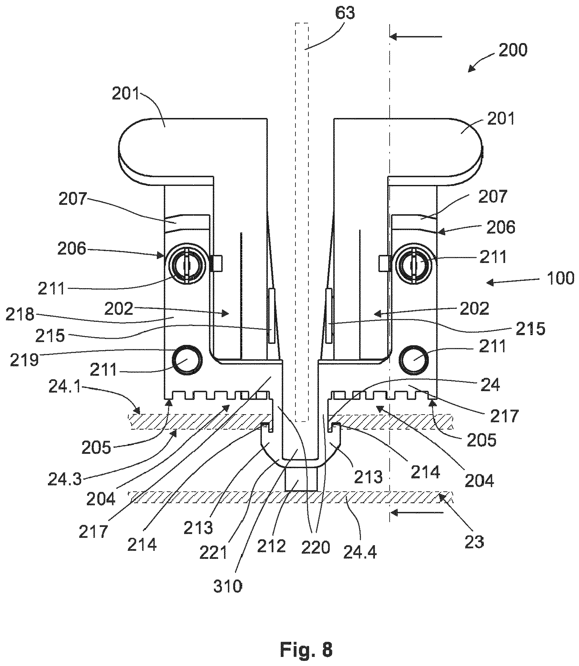

In den Figuren 8 bis 14 ist eine weitere Ausgestaltungsvariante einer erfindungsgemäßen Spannvorrichtung gezeigt.

Wie diese Zeichnungen zeigen, besitzt die Spannvorrichtung 100 wieder einen Klemmabschnitt 200 und einen Spannabschnitt 300. Der Klemmabschnitt 200 besitzt zu beiden Seiten des Aufnahmeabschnitts 310 Basisabschnitte 217. Die Basisabschnitte 217 weisen an ihrer Unterseite den Stützabschnitt 205 auf. Im Bereich dieser Stützabschnitte 205 können nach unten abstehende Rippen vorgesehen sein.

An den Basisabschnitten 217 sind Halter 218 angebracht, die zueinander beabstandet angeordnet sind. Die Halter 218 stehen jeweils an der Oberseite des Basisabschnitts 217 ab. Jeder der Halter 218 bildet eine Lageraufnahme, an der ein Stellelement 202 in Form eines Hebels schwenkbar gelagert ist. Zu diesem Zweck sind Lager 215, beispielsweise Lagerbolzen verwendet, die durch eine Lageraufnahme des Stellelements 202 hindurchgeführt und in die Lageraufnahme des Halters 218 eingesetzt sind. Die von den Lagern 215 gebildeten Schwenkachsen der beiden Stellelemente 202 fluchten miteinander.

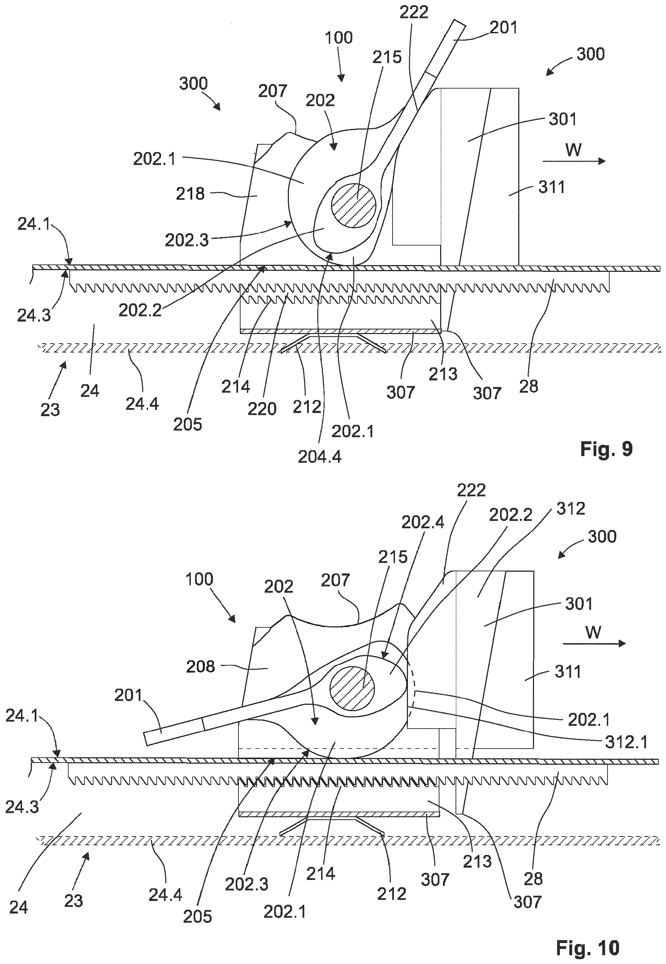

In den Figuren 9 und 10 ist die Gestaltung der Stellelemente 202 näher detailliert. Wie diese Darstellungen zeigen, weisen die Stellelemente jeweils beabstandet zu dem Lager 215 ein Betätigungselement 201 auf, mittels dem das Stellelement 202 manuell um die Schwenkachse des Lagers 215 verschwenkt werden kann. Weiterhin sind an dem Stellelement 202 ein erster Exzenter 202.1 und ein zweiter Exzenter 202.2 vorgesehen. Der erste Exzenter 202.1 bildet eine Führungskurve 202.3, die auf einer Exzenterbahn verläuft.

Der zweite Exzenter 202.2 weist eine Führungskurve 202.4 auf, die auf einer Exzenterbahn verläuft. Die beiden Exzenterbahnen verlaufen exzentrisch zu der Schwenkachse des Lagers 215.

Die Zeichnungen zeigen weiter, dass von den Basisteilen 217 an der Unterseite Stege 220 abstehen, die jeweils einen Teil eines Arretierabschnitts 204 bilden. Im Bereich dieser Stege 220 sind weiterhin Klemmstücke 213 angeformt. Die Klemmstücke 213 tragen wenigstens jeweils ein Formschlusselement 214, vorzugsweise eine Vielzahl von Formschlusselementen 214, die in Form einer Zahnung ausgebildet sein können. Dabei stehen die Formschlusselemente 214 in Richtung auf die Unterseite der Basisteile 217 vor. Die beiden Klemmstücke 213 können, wie Figur 8 zeigt, mit einem Verbindungsteil 221 miteinander verbunden sein.

An der Unterseite des Verbindungsteils 221 ist ein Federelement 212 angeordnet. Die Gestaltung dieses Federelements 212 ergibt sich aus den Figuren 9 und 10. Wie diese Darstellungen zeigen, weist das Federelement 212 einen Befestigungsteil auf, der mit dem Verbindungsteil 221 verbunden ist. Von dem Befestigungsteil ragen zwei Federstücke nach unten ab. Zwischen den Arretierabschnitten 204 und dem Verbindungsteil 221 bildet sich im Klemmabschnitt 200 ein Aufnahmeabschnitt 310 für das Sägeblatt 63.

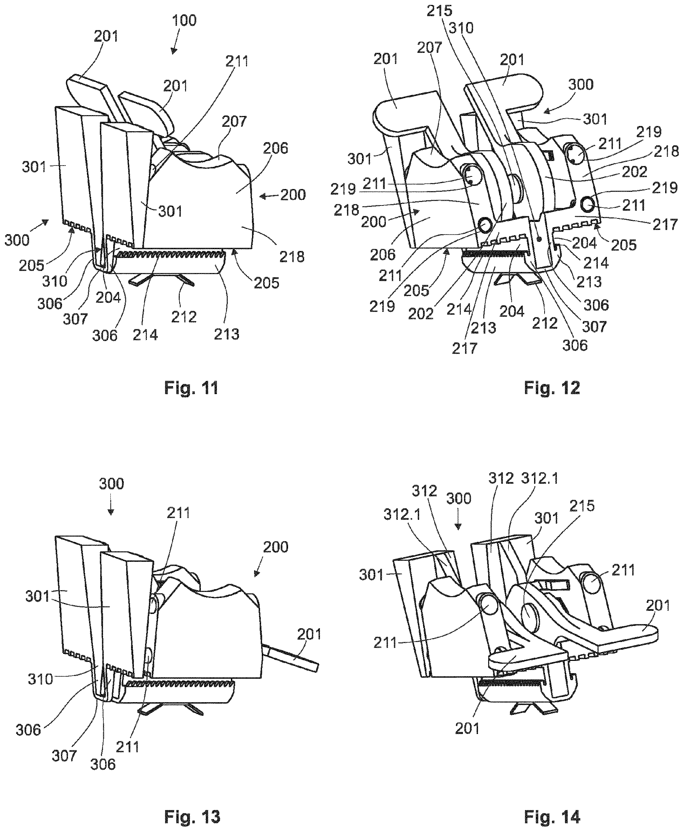

Die Figuren 12 und 14 zeigen, dass an jedem Halter 218 jeweils zwei Führungen 219 vorgesehen sind, die in Form von Linearführungen, insbesondere in Form von Bohrungen ausgebildet sein können. In diesen Führungen 219 ist jeweils ein Stützabschnitt 211 in Form eines Führungsbolzens verschiebbar gelagert. Die beiden Stützabschnitte 211 eines Halters 218 tragen an ihrem längsseitigen Ende jeweils ein Spannelement 301. Die beiden Spannelemente 301 bilden einen Teil des Spannabschnitts 300 und können voneinander getrennt sein. Denkbar ist es auch, wie Figur 13 zeigt, dass die beiden Spannelemente 301 des Spannabschnitts 300 miteinander verbunden sind. Zu diesem Zweck kann an jedem Spannelement 301 ein Ansatz 306 angeformt sein, wobei die Ansätze 306 mittels eines Verbindungselements 307 miteinander verbunden sind. Dabei sind die Ansätze 306 und das Verbindungselement 307 so angeordnet, dass sie den vorstehend erwähnten Aufnahmeabschnitt 310 für das Sägeblatt 63 im Bereich des Spannabschnitts 300 fortführen.

Die Spannelemente 301 weisen auf ihrer den Haltern 218 zugewandten Seite jeweils ein Schubstück 312 auf. Dieses Schubstück 312 bildet eine Kontaktfläche 312.1, die ausgebildet und angeordnet ist, um mit der Führungskurve 202.4. des zweiten Exzenters 202.2 zusammenzuwirken. Auf diese Weise wird ein Kurvengetriebe gebildet

Die Spannvorrichtung 100 gemäß den Figuren 8 bis 10 kann an einer Kreissäge montiert werden, wie sie in Figur 1 dargestellt ist. Um diese Spannvorrichtung 100 bestimmungsgemäß an dem Sägeschlitz 24 montieren zu können, muss der Sägeschlitz 24 entweder frontseitig an dem Ausleger 23 geöffnet sein, um die Spannvorrichtung 100 in den Sägeschlitz 24 einschieben zu können, oder ist es denkbar, dass der Sägeschlitz 24, beispielsweise in seinem dem freien Ende des Auslegers 23 zugewandten Endbereich quer zur Längserstreckung des Sägeschlitzes 24 aufgeweitet ist, so dass die Spannvorrichtung 100 mit den beiden Klemmstück 213 voran in den Ausleger 23 und damit in den Sägeschlitz 24 eingesetzt werden kann.

Wie Figur 9 und 10 zeigen, weist der Ausleger 23 an der Unterseite 24.3 des Begrenzungsrands 24.2 ein Gegen-Formschlusselement 28 auf, welches in Form einer Zahnstange ausgebildet sein kann. Dabei sollte die Zahnung des Gegen-Formschlusselements 28 angepasst auf die Zahnung des Formschlusselements 214 ausgebildet sein und insbesondere die gleiche Teilung aufweisen.

Vorzugsweise können die Zahnungen des Gegen-Formschlusselements 28 und des Formschlusselements 214 eine sägezahnförmige Geometrie aufweisen, wobei die Sägezahn-Geometrie entgegen der Werkstück-Spannrichtung W eine steile Flanke und in Werkstück-Spannrichtung W eine geneigt verlaufende Zahnflanke aufweist, wie Figur 9 deutlich zeigt.

Das Gegen-Formschlusselement 28 kann an einem oder an beiden Begrenzungsrändern 24.2 des Sägeschlitzes 24 angeordnet sein.

Figur 9 zeigt, dass der Ausleger 23 beabstandet zu der Unterseite 24.3 einen Boden 24.4 aufweist. Auf diesem Boden 24.4 stützt sich die Spannvorrichtung 100 mit ihrem Federelement 212 ab.

Im entriegelten Zustand der Spannvorrichtung 100, der in Figur 9 gezeigt ist, ist das Stellelement 202 in die Entriegelungsstellung geschwenkt. In dieser Entriegelungsstellung liegt der erste Exzenter 202.1 mit seiner Führungskurve 202.3 auf der Auflagefläche 24.1 des Auslegers 23 auf, so dass auch hier ein Kurvengetriebe gebildet ist. Insbesondere stützt sich der erste Exzenter 202.1 mit einem Teil seiner Führungskurve 202.3 auf der Auflagefläche 24.1 des Begrenzungsrands 24.2 ab, der eine große Beabstandung zu der Schwenkachse des Lagers 215 aufweist. In dieser Betriebsposition sind die Formschlusselemente 214 außer Eingriff mit den Gegen-Formschlusselementen 28.

Das Federelement 212 bringt über das Verbindungsteil 221 eine Federvorspannung in den Klemmabschnitt 200 ein. Diese Federvorspannung versucht die Klemmstücke 213 mit den Gegen-Formschlusselement 28 in Eingriff zu bringen. Der sich auf der Auflagefläche 24.1 abstützende erste Exzenter 202.1 verhindert dies jedoch. Um diese Betriebsposition aufrechtzuerhalten, stützt sich das Betätigungselement 201 an einem Anschlag 222 des Halters 218 ab.

Werden nun die Betätigungselemente 201 ausgehend aus der in Figur 9 gezeigten entriegelten Stellung von dem Anschlag 222 abgehoben und in die verriegelte Stellung gemäß Figur 10 geschwenkt, so drückt das Federelement 212 die Formschlusselemente 214 nach oben und bringt sie in Eingriff mit den Gegen-Formschlusselementen 28, um eine formschlüssige Verbindung zwischen den Klemmstücken 213 und den Begrenzungsrändern 24.2 in Richtung der Längserstreckung des Sägeschlitzes 24 zu erreichen. Zu diesem Zweck ist die Führungskurve 202.3 so gestaltet, dass der Abstand der Führungskurve 202.3 zu der Schwenkachse des Lagers 215 kontinuierlich abnimmt, wenn die Betätigungselemente 201 entriegelten Stellung in die verriegelte Stellung geschwenkt werden. Auf diese Weise kann sich das Federelement 212 kontinuierlich entspannen.

Der zweite Exzenter 202.2 ist mit seiner Führungskurve 202.4 so angeordnet und ausgelegt, dass dann, wenn die Formschlusselemente 214 und das Gegen-Formschlusselement 28 beginnen miteinander in Eingriff zu kommen, die zweite Führungskurve 202.4 auf die Kontaktfläche 312.1 des Schubstücks 312 trifft. Die zweite Führungskurve 202.4 ist so ausgelegt, dass in Schwenkrichtung des Betätigungselements 201 von der Entriegelungsstellung in die in Figur 10 gezeigte Verriegelungsstellung sich der Abstand der Führungskurve 202.3 im Kontaktbereich mit der Kontaktfläche 312.1 von der Schwenkachse des Lagers 215 kontinuierlich vergrößert. Dies bewirkt, dass das Spannelement 301 an der Kontaktfläche 312.1 kontinuierlich in Werkstück-Spannrichtung W verschoben wird.

Diese Stellbewegung der Spannelemente 301 wird mittels der Stützabschnitte 211 in den Führungen 219 der Halter 218 geführt und gestützt.

Mit anderen Worten wird bei der Spannvorrichtung 100 gemäß den Figuren 8 bis 14 zunächst der Klemmabschnitt 200 an den Begrenzungsrändern 24.2 mit den beiden Betätigungselementen 201 festgelegt. Anschließend erfolgt die Verstellung der Spannelemente 301 in Richtung auf das zu spannende Werkstück 70, wobei dann gleichzeitig auch die Klemmstücke 213 in ihre endgültige Position gebracht werden.

Ähnlich wie bei der Ausgestaltungsvariante gemäß den Figuren 1 bis 7 stellt der Aufnahmeabschnitt 310 wieder einen Bereich innerhalb des Sägeschlitzes 24 bereit, durch den das Sägeblatt 63 während des Sägevorgangs eingreifen kann, um das Werkstück 70 zu zerteilen. Figur 8 zeigt deutlich die Zuordnung des Sägeblatts 63 zu dem Aufnahmeabschnitt 310 während des Schneideingriffs.

Wenn nach erfolgtem Sägevorgang die Spannvorrichtung 100 wieder entfernt werden soll, oder ein weiteres Werkstück 70 gespannt werden soll, so muss lediglich das Betätigungselement 201 im Uhrzeigersinn von der in Figur 10 gezeigten Ausgangsposition in die in Figur 9 gezeigte Entriegelungsstellung geschwenkt werden. Dabei werden dann die Formschlusselemente 214 außer Eingriff mit dem Gegen-Formschlusselement 28 gebracht und das Federelement 212 wieder am Boden 24.4 gespannt. Anschließend kann die Spannvorrichtung 100 längs des Sägeschlitzes 24 verschoben werden.

In den Figuren 15 A bis 15 E ist veranschaulicht, dass gemäß einer Ausgestaltungsvariante mit den Spannelementen 301 jeweils eine Spannbacke 311 auswechselbar verbunden sein kann, um das Spannelement 301 auf das zu spannende Werkstück 70 individuell anpassen zu können.

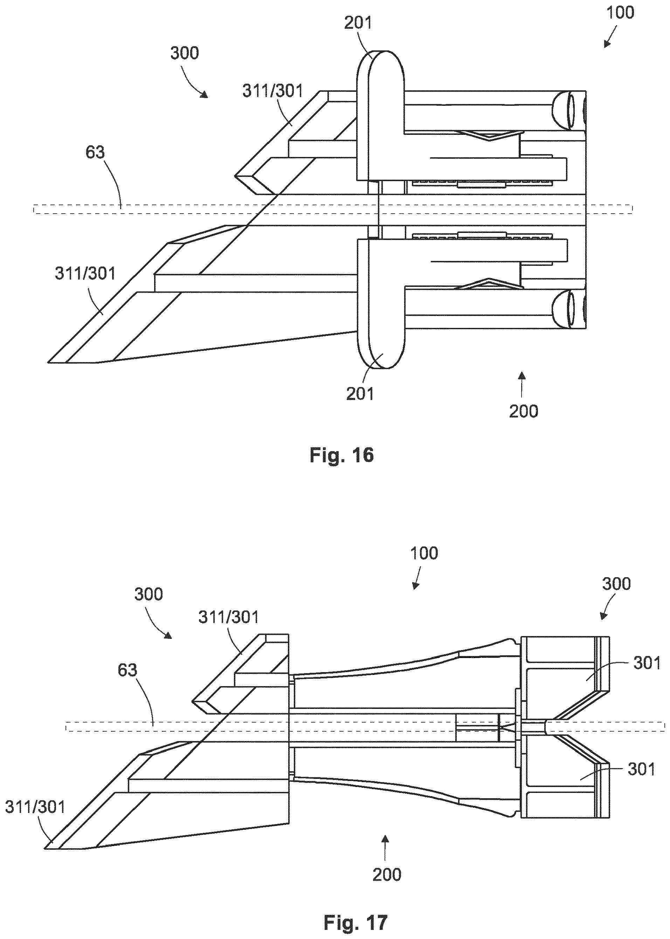

Dies ist auch in Figur 16 näher detailliert. Dort ist veranschaulicht, dass mit den beiden Spannelementen 301 unterschiedliche oder gleiche Spannbacken 311 auswechselbar verbunden sein können. Denkbar ist es jedoch auch, dass die beiden Spannelemente 301 bereits unterschiedlich ausgebildet sind, um eine spezielle Sägeaufgabe, beispielsweise einen Gehrungsschnitt zu ermöglichen.

Figur 17 veranschaulicht eine Ausgestaltungsvariante der Erfindung, die auf der Ausführungsform gemäß den Figuren 2 bis 7 aufbaut. Wie diese Darstellung zeigt, können an einem Klemmabschnitt 200 auch zwei Spannabschnitte 300 angeordnet sein.

Bei der in Figur 17 verwendeten Ausführungsform entspricht der Klemmabschnitt 200 und der Spannabschnitt 300 auf der rechten Seite identisch der Ausführungsform gemäß den Figuren 2 bis 7, sodass auf diese Ausführungen verwiesen werden kann. Auf der linken Seite ist der zusätzliche Spannabschnitt 300 in ähnlicher Weise an den Klemmabschnitt 200 angebaut, wie der rechte Spannabschnitt 300. Der linke Spannabschnitt 300 ist so ausgebildet, dass ein von dem rechten Spannelement 301 verschiedenes Spannelement verwendet ist, das beispielsweise geneigte Spannflächen zur Verwirklichung eines Gehrungsschnittes aufweist. Zur Verdeutlichung ist in dieser Zeichnung auch wieder in gestrichelter Darstellung das Sägeblatt 63 eingezeichnet.

## Patentansprüche

1. Spannvorrichtung (100) für eine Kreissäge, insbesondere eine Kappsäge oder eine Kapp-Zugsäge, mit wenigstens einem Spannabschnitt (300) der zumindest ein Spannelement (301) zur Spannung eines Werkstücks (70) an der Kreissäge aufweist, wobei ein Klemmabschnitt (200) vorgesehen ist, der zur Befestigung der Spannvorrichtung (100) an der Kreissäge ausgebildet ist,
**dadurch gekennzeichnet,**
**dass** der Klemmabschnitt (200) und/oder der Spannabschnitt (300) einen Aufnahmeabschnitt (310) bilden, der dazu ausgebildet ist ein Sägeblatt (63) an dessen Außenumfang bereichsweise aufzunehmen, und dass der Klemmabschnitt (200) einseitig oder beidseitig des Aufnahmeabschnitts (310) einen oder mehrere Arretierabschnitte (204) aufweist, die dazu ausgebildet und angeordnet sind, die Spannvorrichtung (100) im Bereich einer Auflagefläche (24.1) eines Begrenzungsrands (24.2) des Sägeschlitzes (24), vorzugsweise an dem Begrenzungsrand (24.2) des Sägeschlitzes (24), der Kreissäge form- und/oder kraftschlüssig festzulegen.

2. Spannvorrichtung (100) nach Anspruch 1, **dadurch gekennzeichnet, dass** mit dem Klemmabschnitt (200) wenigstens ein Betätigungselement (201) gekoppelt ist, und dass der Arretierabschnitt (204) mittels des Betätigungselements (201) zwischen einer Verriegelungsstellung und einer Entriegelungsstellung verstellbar ist und/oder der Spannabschnitt (300) in eine Spannposition zur Spannung des Werkstücks (70) verstellbar ist.

3. Spannvorrichtung nach einem der Ansprüche 1 oder 2, **dadurch gekennzeichnet, dass** der Klemmabschnitt (200) ein Federelement (212) aufweist, mittels dem der oder die Arretierabschnitt/-e (204) von einer Entriegelungsstellung in eine Verriegelungsstellung verstellbar ist/sind, wobei insbesondere vorgesehen sein kann, dass das Federelement (212) in der Verriegelungsstellung eine Vorspannkraft in Richtung von der Entriegelungsstellung auf die Verriegelungsstellung in den oder die Arretierabschnitte (204) einbringt.

4. Spannvorrichtung nach einem der Ansprüche 1 bis 3, **dadurch gekennzeichnet, dass** ein Stellelement (202) einen Teil eines Getriebes bildet, mittels dem der zumindest eine Arretierabschnitt (204) und/oder der zumindest eine Spannabschnitt (300) in einem Bewegungsbereich verstellbar ist

5. Spannvorrichtung nach Anspruch 3 oder 4, **dadurch gekennzeichnet, dass** an den beiden Arretierabschnitten (204) jeweils ein Übertragungselement (203) angeschlossen ist, dass die beiden Übertragungselemente (203) den Arretierabschnitten (204) abgewandt mit dem Federelement (212) gekoppelt sind, und dass die Übertragungselemente (203) beidseitig des Aufnahmeabschnitts (310) angeordnet sind.

6. Spannvorrichtung nach Anspruch 4 oder 5, **dadurch gekennzeichnet, dass** das Getriebe das Betätigungselement (201) und das Stellelement (202) aufweist, wobei das Betätigungselement (201) in Form eines Hebels mittels eines Lagers (215) schwenkbar an dem Klemmabschnitt (200) festgelegt ist,
dass das Stellelement (202) einen ersten Exzenter (202.1) aufweist, mittels dem der Arretierabschnitt (204) zwischen der Verriegelungsstellung und der Entriegelungsstellung verstellbar ist, insbesondere von der Verriegelungsstellung in die Entriegelungsstellung verstellbar ist, und/oder der Spannabschnitt (300) in die Spannposition bewegbar ist,
und/oder dass das Stellelement (202) ein Stellglied aufweist, mittels dem der Arretierabschnitt (204) von der Entriegelungsstellung in die Verriegelungsstellung verstellbar ist,
und/oder dass der Arretierabschnitt (204) mittels eines zweiten Exzenters (202.2) in der Verriegelungsstellung blockiert, insbesondere formschlüssig festgelegt ist.

7. Spannvorrichtung nach einem der Ansprüche 1 bis 6, **dadurch gekennzeichnet, dass** der oder die Arretierabschnitte (204) einen Stützabschnitt (205) und beabstandet zu diesem Stützabschnitt (205) ein Klemmstück (213) aufweist, und dass der Stützabschnitt (205) und das Klemmstück (213) auf der dem Aufnahmeabschnitt (310) abgewandten Bereich außenseitig angeordnet sind.

8. Spannvorrichtung nach einem der Ansprüche 1 bis 7, **dadurch gekennzeichnet, dass** der Spannabschnitt (300) in und/oder entgegengesetzt zu einer Werkzeugspannrichtung (W) verstellbar gegenüber dem Klemmabschnitt (200) angekoppelt ist.

9. Spannvorrichtung nach Anspruch 8, **dadurch gekennzeichnet, dass** der Spannabschnitt (300) mittels eines Federabschnitts (308) an den Klemmabschnitt (200) angekoppelt ist
oder dass der Spannabschnitt (300) mittels einer Schiebeführung an den Klemmabschnitt (200) angekoppelt ist.

10. Spannvorrichtung nach einem der Ansprüche 1 bis 9, **dadurch gekennzeichnet, dass** der Klemmabschnitt (200) einen Stützabschnitt (211) aufweist, an dem der Spannabschnitt (300) in einer Werkzeugspannposition mit einem Anschlag, vorzugsweise mit einem sich quer zur Werkstückspannrichtung (W) erstreckenden Flächenabschnitt (304), anliegt.

11. Spannvorrichtung nach einem der Ansprüche 1 bis 10 **dadurch gekennzeichnet, dass** der Spannabschnitt (300) zwei zueinander beabstandete Ansätze (306) aufweist, die beidseitig des Aufnahmeabschnitts (310) angeordnet sind und die vorzugsweise mittels eines Verbindungselements (307) am unteren Endbereich des Aufnahmeabschnitts (310) miteinander verbunden sind.

12. Spannvorrichtung nach einem der Ansprüche 1 bis 11, **dadurch gekennzeichnet, dass** der Spannabschnitt (300) ein oder mehrere Spannelemente (301) aufweist, die einseitig oder beidseitig des Aufnahmeabschnitts (310) angeordnet sind und der/die dem Klemmabschnitt (200) abgewandt jeweils eine vordere Werkstückspannfläche aufinieist/-en.

13. Spannvorrichtung nach einem der Ansprüche 1 bis 12, **dadurch gekennzeichnet, dass** die eine oder mehrere der Werkstückspannflächen in Richtung der WerkstückspannRichtung (W) geneigt verlaufen.

14. Spannvorrichtung nach einem der Ansprüche 1 bis 13, **dadurch gekennzeichnet, dass** an dem oder den Spannelementen (301) des Spannabschnitts (300) zumindest eine auswechselbare Spannbacke (311) angeordnet ist, wobei die Spannbacke (311) die Werkstückspannfläche bildet.

15. Spannvorrichtung nach einem der Ansprüche 1 bis 14, **dadurch gekennzeichnet, dass** an gegenüberliegenden Seiten des Klemmabschnitts (200) jeweils ein Spannabschnitt (300) vorgesehen ist.

16. Spannvorrichtung nach einem der Ansprüche 1 bis 15, **dadurch gekennzeichnet, dass** an dem Klemmabschnitt (200) zumindest ein Formschlußelement (214) vorgesehen ist, welches angeordnet und ausgebildet ist, um mit einem Gegen-Formschlußelement (28) der Kreissäge zusammenzuarbeiten, um eine Verstellung des Klemmabschnitts (200) gegenüber der Kreissäge in der Verriegelungsstellung des Klemmabschnitts (200) entgegengesetzt zur Werkzeug-Spannrichtung (W) zu verhindern, wobei vorzugsweise vorgesehen ist, dass eine Vielzahl von Formschlusselementen (214) und/oder Gegen-Formschlusselementen (28) eine Zahnreihe bilden.

17. Kreissäge, insbesondere Kappsäge oder Kapp-Zugsäge, mit einem Maschinenbett (10), das eine Auflage mit einer Auflagefläche (16, 24.1) zur Abstützung eines zu sägenden Werkstücks (70) aufweist, wobei die Auflage einen Sägeschlitz (24) aufweist,
**dadurch gekennzeichnet, dass** im Bereich des Sägeschlitzes (24) eine Spannvorrichtung (100) nach einem der Ansprüche 1 bis 15 angeordnet ist, wobei die Spannvorrichtung (100) mit ihrem Befestigungsabschnitt (200) im Bereich der Auflagefläche (24.1) des Begrenzungsrands (24.2) des Sägeschlitzes (24), vorzugsweise an dem Begrenzungsrand (24.2), insbesondere form- und/oder kraftschlüssig, festgelegt ist, und wobei der Aufnahmeabschnitt (310) im Bereich des Sägeschlitzes (24) angeordnet ist.
